(19) Europäisches Patentamt
European Patent Office
Office européen des brevets

(11) **EP 3 502 064 B1**

(12) **EUROPEAN PATENT SPECIFICATION**

(45) Date of publication and mention of the grant of the patent:
**21.06.2023 Bulletin 2023/25**

(21) Application number: **18210507.2**

(22) Date of filing: **05.12.2018**

(51) International Patent Classification (IPC):
***C02F 3/32*** *(2023.01)*      ***C02F 3/34*** *(2023.01)*
*C02F 1/00* *(2023.01)*      *C02F 103/20* *(2006.01)*

(52) Cooperative Patent Classification (CPC):
**C02F 3/327; C02F 3/341; C02F 3/347; C02F 3/348;**
C02F 2001/007; C02F 2103/20; C02F 2303/24;
Y02W 10/10

(54) **APPARATUS AND METHOD OF TREATMENT OF ZOOTECHNICAL SEWAGE**

VORRICHTUNG UND VERFAHREN ZUR BEHANDLUNG VON ZOOTECHNISCHEM ABWASSER

APPAREIL ET PROCÉDÉ DE TRAITEMENT D'EAU USÉE ZOOTECHNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2017 IT 201700149324**

(43) Date of publication of application:
**26.06.2019 Bulletin 2019/26**

(73) Proprietor: **Fellini, Stefano**
**37010 Lazise (VR) (IT)**

(72) Inventor: **Fellini, Stefano**
**37010 Lazise (VR) (IT)**

(74) Representative: **Manfrin, Marta et al**
**Società Italiana Brevetti S.p.A.**
**Stradone San Fermo 21 sc. B**
**37121 Verona (VR) (IT)**

(56) References cited:
**ES-A1- 2 363 363      FR-A1- 3 013 347**
**US-A- 6 126 827      US-A1- 2014 342 973**

## Description

### Technical field

The present invention relates to a method for the treatment of zootechnical sewage, and to an apparatus for said treatment. More particularly, the method and the apparatus relate to the treatment of phyto-depuration of sewage from pigs.

### Background

In the traditional agro-zootechnical systems, especially active up to some decades ago, the used energies and resources had a circular course. The animal excrements were mixed with straws deriving from the cereal activity, to be then composted and re-entered as amendments and fertilizers in cultivations. For this reason, the zootechnical excrements, in this specific case manure, represented a production economic good apt to be re-used inside the same company or to be intended to sale as by-product. At the same time the water was handled in all its forms to be then re-used in the company. With this systemic approach, the production of sewage resulted to be highly limited and the pollution problems were quite reduced.

As the agricultural activities became more intense and specialized, the production of liquid manure per unit of cultivable area exceeded the sustainable absorption capacity of nutrients and nitrogen-based compounds by cultures. Consequently, the animal excrements which represented an essential resource for business management on the contrary assume the connotation of waste, which apart from causing huge economic problems represent pollution factors for soil and water bodies. In fact, animal excrements, in particular those from pigs, contain a high content of nitrogen, in form of ammoniacal nitrogen, nitric nitrogen, nitrous nitrogen, and organic nitrogen, and other highly polluting agents.

For example, suffice it to say that in a farm of pigs whose average live weight of the heads is 225-230 tons produces an amount of sewage, deriving from animal excrements and from washing of barns, varying from 30 and 40 cubic meters per day. Consequently, this involves a high amount of sewage to be stored and treated before disposal on the ground. Moreover, the water which is collected from aquifers with huge energy consumption usually is not recovered. The purification treatments consist in a series of processes through which the unwished substances are removed from the water existing in the sewage. Currently, the methods used for the purification treatment of the sewage can be classified in two macro categories: the chemical-physical methods and the biological methods, thereamong the so-called phyto-depuration methods. The first ones are based upon the principle of the chemical or physical separation of the nitrogen-based compounds existing in the sewage itself and they request the use of complex, cumbersome and highly energy-consuming plants. Moreover, some of them produce by-products which currently cannot be found in the list of fertilizers in many Countries and then require an additional disposal process with consequent additional costs. On the contrary, the second methods are based upon the action of plants and/or algae and of particular bacteria which through several and different redox processes allow to remove pollutants, for example by converting ammonium into molecular nitrogen. Even in this case, the methods require the consumption of high amounts of electrical energy and involve the use of particularly cumbersome plants which not always allow to obtain satisfying results in terms of reduction in pollutants.

FR3013347, US6126827 and ES2363363 relate to the treatment of animal wastes comprising phyto-depuration basins.

### Summary of the invention

The technical problem placed and solved by the present invention then is to provide a systemic approach relating the treatment of zootechnical sewage, in particular from pigs, allowing to obviate to the drawbacks mentioned above with reference to the known art.

Such problem is solved by a method according to claim 1 and by an apparatus according to claim 9.

Preferred features of the present invention are set forth in the dependent claims.

The present invention provides some relevant advantages. The main advantage consists in that the method and the apparatus allow to use a reduced amount of energy and to occupy little surface, however by guaranteeing high performances in terms of reduction in pollutants and effective management of cycle of waters.

Other advantages, features and use modes of the present invention will result evident from the following detailed description of some embodiments, shown by way of example and not for limitative purposes.

### Brief description of the figures

The figures of the enclosed drawings will be referred to, wherein:

- Figure 1 shows a schematic representation exemplifying a preferred embodiment of the phyto-depuration apparatus;
- Figure 2 shows a schematic representation exemplifying a preferred embodiment of the first portion of the phyto-depuration apparatus;
- Figure 3 shows a schematic representation exemplifying a preferred embodiment of the vertical flow phyto-depuration basins VFV;
- Figure 4a shows a cross section of a preferred embodiment of the horizontal flow phyto-depuration basins VFO including inside thereof the filling medium;
- Figure 4b shows a longitudinal section of a preferred embodiment of the horizontal flow phyto-depuration basins VFO including the filling medium inside thereof;
- Figure 5 shows a schematic representation exemplifying a preferred embodiment of the inlet wells of the vertical flow phyto-depuration basins VFO;
- Figure 6 shows a schematic representation exemplifying a preferred embodiment of the distribution device of the vertical flow phyto-depuration basins VFO;
- Figure 7 shows a schematic representation exemplifying a preferred embodiment of the collection device of the vertical flow phyto-depuration basins VFO;
- Figure 8 shows a schematic representation exemplifying a preferred embodiment of the discharge well of the vertical flow phyto-depuration basins VFO.

**Detailed description of preferred embodiments**

A preferred embodiment of the invention will be described hereinafter and this by referring to the above-mentioned figures.

Analogous components are designated in the different figures with the same numeral reference.

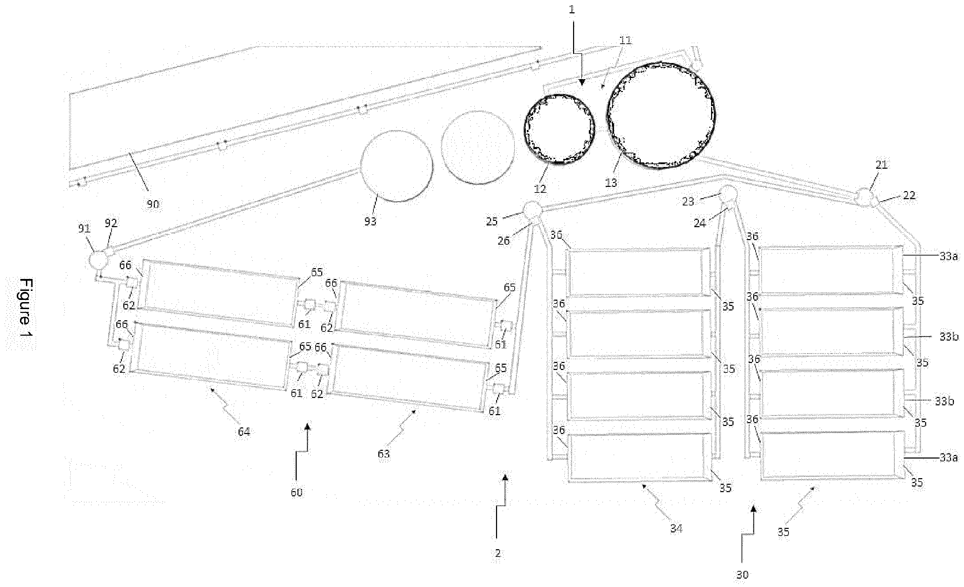

By firstly referring to Figure 1, according to a preferred embodiment of the invention the apparatus is designated as a whole with 100.

The first step of the method consists in introducing a mixture of effective micro-organisms in animal feeding systems or diet, on the surface of the barns, on the litter, and/or in a storage tank and/or in the phyto-depuration basins.

Such mixture comprises bacteria and fungi, ir particular it comprises Lactobacilli, Yeasts, Photosynthetic bacteria, Actinomycetes, fermentative fungi.

According to a preferred embodiment it will comprise one or more of the following species of bacteria and/or fungi, still more preferably the mixture will comprise all of them:

Lactobacillus:

- Casei (ATTCC 7469)
- Plantarum (ATTCC 8014)
- Delbrueckii
- Fermentum
- Acidophilus
- Bulgaricus
- Buchneri (CCM 1819)
- Lactococcus Diacetylactis
- Lactococcus Lactis (Streptococcus lactis)
- Leuconostoc pseudomesenteroides subsp.lactis biov. Diacetyllactis
- Leuconostoc pseudomesenteroides
- Bifidobacterium animalis
- Bifidobacterium bifidum
- Bifidobacterium longum
- Streptococcus thermophilus

Yeasts:

- Saccharomyces cerevisiae (Brauhefe, Bäckerhefe)
- Bacilus subtilis (Rhizosphärebakterie)
- Candida utilis

Photosynthetic bacteria:

- Rhodopseudomonas palustris
- Rhodopseudomonas sphaeroides

Actinomycetes (Actinobacteria):

- Streptomyces albus
- Streptomyces griseus

Fermentative fungi:

- Aspergillus oryzae
- Mucor hiemalis

Preferably even the bacteria *Pseudomonas* and *Clostridium.*

The mixture of effective micro-organisms can be added to animal drinking and/or feed. Additionally, or alternatively, the mixture of effective micro-organisms can be added to the animal drinking systems or mangers. Preferably, the mixture of micro-organisms is added in percentages comprised between 0.2% and 2% (percentage in water with respect to the animal weight). Moreover, preferably the mixture of effective micro-organisms is added weekly on the barn surface in amounts comprised between 0.005 l/m$^2$ and 0.1 l/m$^2$. Additionally, a preferential feature is the weekly addition to the litter of a mixture comprising lava rock flour and the mixture of effective micro-organisms in amounts comprised between 100 g/m$^2$ and 500g/m$^2$.

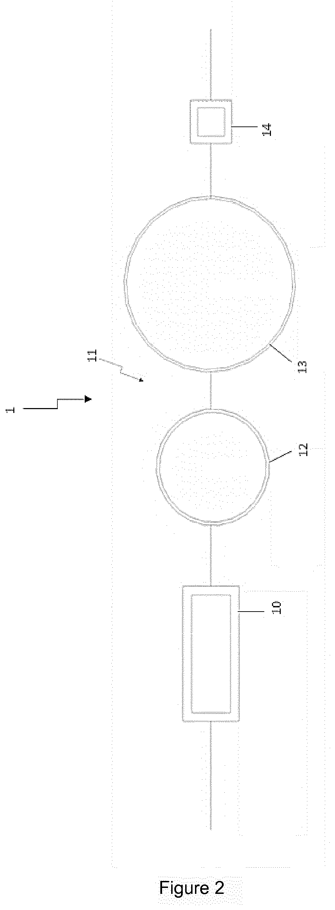

In the barns, the pig excrements diluted in washing water are collected in collection tanks 90, placed under the flooring grids. From said collection tanks 90, the sewage is conveyed, for example through pipes and pumping stations, to the so-called first portion 1 of the apparatus 100. Inside the first portion 1, as shown in Figure 2, the sewage is made to pass first of all inside liquid-solid separation means 10 to separate the liquid fraction from the solid one existing in the sewage, wherein means for the mechanical separation will be used, said means being a helical separator. The solid fraction of the sewage obtained from the separation is conveyed in a space underneath the separation means 10. Said extracted solid fraction is a semi-solid material which will be subjected, separately, to a composting and treating process with effective micro-organisms to obtain the improver-fertilizer.

The liquid fraction of the sewage is collected in a series of storage tanks 11. The liquid fraction of the sewage is collected in a first storage tank 12 and it is made to sediment. When the liquid fraction of the sewage reaches a certain height inside said first storage tank 12, for example 3.7m, it is made to overflow inside a second storage tank 13, wherein it is made to sediment again and it is subjected to the oxidation action by effective micro-organisms. In such second storage tank 13 in fact the previously mentioned mixture of effective micro-organisms in amounts comprised between 1l and 2l per ton of sewage to be phyto-depurated is introduced.

Preferably the duration of the sedimentation process in the first storage tank 12 is 19-21 days whereas the duration of the sedimentation and oxidation process in the second storage tank 13 is about 45-50 days. Therefore, the residence time of the liquid fraction of the sewage inside said first and second storage tank is about 3 months.

Once the sedimentation and oxidation have taken place inside the secondary tank 13, the liquid fraction of the sewage is collected by means of a pumping station 14 from the second storage tank and conveyed inside the second portion 2 of the apparatus 100.

Inside the second portion 2 of the apparatus 100, there are vertical submerged flow basins 30 (VFV) and horizontal submerged flow basins (60). Firstly, the liquid fraction of the sewage is collected in a first charging tank 21, from this point the liquid fraction of the sewage is subjected to at least two subsequent passages of phyto-depuration at first through vertical submerged flow basins 30 (VFV) and subsequently through horizontal submerged flow basins 60 (VFO).

The basins VFV 30 are arranged in two arrays 33, 34 in series, each one consisting of 4 basins. The first passage of phyto-depuration takes place by making the sewage liquid fraction to pass through the first array 33 and the second array 34 of basins VFV sequentially. In the specific case, the flow of the liquid fraction of sewage included in the first charging tank 21 is sent to the four basins of the first array 33 of basins VFV. The sending of the liquid fraction of the sewage takes place by means of a pumping station 22, preferably comprising two analogous submerged pumps with separate delivery for feeding alternatively the pair of side basins 33a and the pair of central basins 33b.

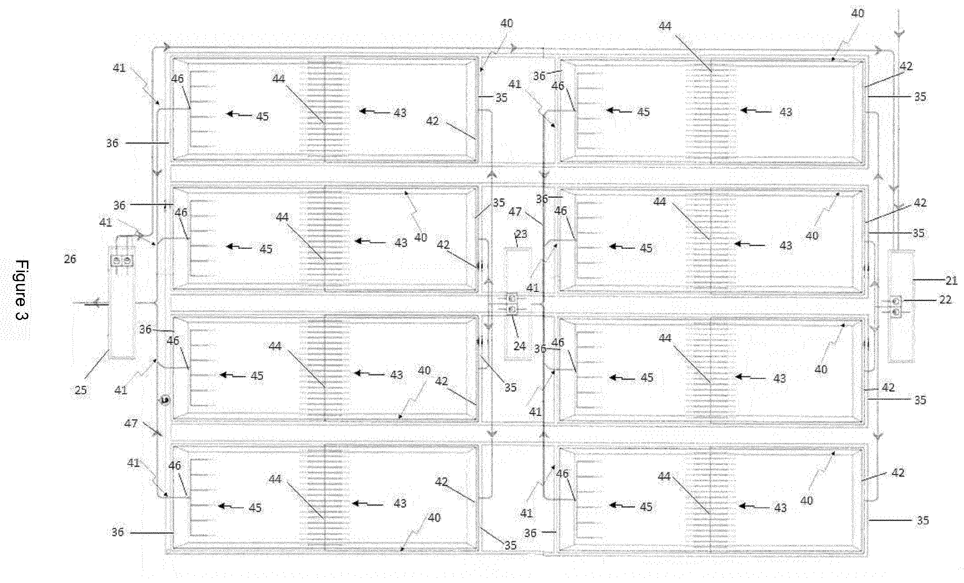

Therefore, through a distribution device 40, shown in Figure 3, the liquid fraction of the sewage is distributed inside the first array of basins VFV 33 uniformly so as to fully exploit the depurative effectiveness of the apparatus 100. In fact, should some sections of the basins receive a smaller or larger amount of liquid fraction of the sewage one would incur in a lower depurative capability (since all plants are working at the same regime).

Moreover, the distribution takes place discontinuously, that is intermittently wherein charge periods are followed by break periods, for allowing a strong aeration of the surface of the basins. In this way the aerobic processes are promoted by favouring the removal of the organic substance and the nitrification. Such feeding type takes place by means of a pumping station.

The sewage liquid fraction distributed on the surface of each basin VFV of the first array 33 then leaches towards the basin bottom by crossing transversally the filling medium 50 and by passing through the radical system of the macrophyte plants whereon the bacterial flora settles.

In fact, the basins VFV of the first array 33 contain a filling medium 50 formed by layers of gravel 51 and sand 52 having different granulometries whereon aquatic macrophyte plants, preferably of the species *Phragmites Australis* ("common reed"), are rooted. The filling medium has even the function of guaranteeing the passage and filtering of water, then it constitutes a real hydraulic system. As far as the filling medium is concerned, it is constituted by: round river gravel 51a having granulometry comprised between 16 and 32 mm and forming a first filling layer on the bottom of the basin, fluvial sand 52 having granulometry comprised between 0 and 3 mm forming an intermediate filling layer, round river gravel 51b having granulometry comprised between 8 and 16 mm and forming a basin filling surface layer.

Moreover, the basins VFV of the first array 33 include the mixture of above-mentioned effective micro-organisms.

The inner environment of the basins VFV of the first array 33 is rich in oxygen and then it favours nitrification processes by nitrosating bacteria, which transform ammonium (NH4+) into nitrites (NO2). There are also anaerobic processes instead by denitrifying bacteria which transform (oxidation) the nitrites into nitrates (NO3). There are also other bacteria which cause denitrification and then transformation of the nitrates into nitrogen.

Once effected such processes, the liquid fraction reaches the bottom of the basins VFV of the first array 33 wherein it is collected by a collection device 41 shown in detail in Figure 3.

Then, the liquid fraction of the sewage is conveyed to a second charging tank 23, which includes a pumping station 24, for feeding the second array of basins VFV 34. The second array of basins VFV 34 and the second charging tank 23 have capacity and functionality and features wholly identical to those of the first charging tank 21 and of the first array of basins VFV 33.

Therefore, inside the second array of basins VFV 34 the liquid fraction of the sewage is subjected to the same phyto-depurative processes which takes place in the first array of VFV 33.

After having crossed the second array of basins VFV 34, the liquid fraction of the sewage is conveyed to the inner portion of a third charging tank 25, analogous to the preceding ones, which is downstream of said second array of basins VFV 34. On the third tank 25 a pumping station 26 is installed, responsible for sending the liquid fraction of the sewage to the phyto-depuration basins VFO and which, if necessary, can re-launch the sewage liquid fraction to the first charging tank 21 to start a new phyto-depuration step inside the basins VFV. Such activity, called "sewage recirculation" is useful to further reduce the content of pollutants.

After having performed the first passage of phyto-depuration inside the basins VFV 33 and in case the recirculation inside the same, from the third charging tank 25, the sewage liquid fraction is sent to the basins VFO 60 inside thereof the second passage of phyto-depuration takes place.

The basins VFO 60 are arranged in two arrays, each one consisted of two basins, in series with each other 63 and 64, respectively. The second passage of phyto-depuration takes place by making the liquid fraction of the sewage to pass through the first and the second array of VFO 63 and 64.

Said basins VFO of the first array 63 include the above-mentioned mixture of effective micro-organisms and a filling medium 53. The filling medium 53 is constituted by layers of gravel 54 having different granulometries whereon aquatic macrophyte plants, preferably of the species *Phragmites Australis* ("common reed"), are rooted. The filling medium itself is formed by: round river gravel 54a having granulometry of about 3cm and round river gravel 54b having granulometry comprised between 0.8 and 1.6 cm. It is preferred that there is an additional third layer of gravel 54c to cover wholly the surface of the VFO 63. It is particularly preferred that the gravel 54 has round shape and it is not broken gravel. It is further preferred that the gravel is well washed and without clays or other substances. The first array of basins VFO 63 is always saturated with liquid fraction of the sewage. The basins VFO 63 are constantly kept saturated with liquid fraction of the sewage. Preferably, the level of the liquid fraction of the sewage inside the basins VFO 63 is kept at about 10cm below the surface layer of the filling medium 53.

The environment, inside thereof, is mainly anaerobic and more functional to denitrification processes by bacteria *Pseudomonas and Clostridium.*

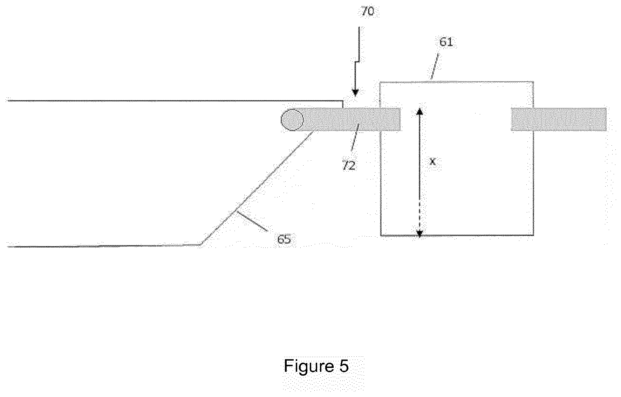

The second passage of phyto-depuration provides that first of all the liquid fraction of the sewage reaches the inlet well 61 of each one of the basins VFO of the first array 63. As it can be seen from Figure 5, the inlet wells 61 are placed upstream of each VFO of the first array 63 and communicate, through a distribution device 70, with the inlet side 65 of the respective basin. At this point, by exploiting the hydraulic charge which is created inside the inlet well 61, the sewage liquid fraction outflows by gravity inside the distribution device 70 of the basins of the first array of VFO 63. The sewage liquid fraction then leaches parallelly to the bottom of each basin VFO of the first array 63 through the filling medium 53 as far as the outlet side 66 of the basin wherein the sewage liquid fraction, depurated by now, is collected by means of a collection device 71. Then, the fraction of the sewage outletting from the first array of VFO 63 is conveyed to the second array of basins VFO 64. The second array of basins VFO 64 has capacity and functionality and features wholly identical to those of the first array of basins VFO 63, therefore inside such second array of basins VFO 64 the liquid fraction of the sewage is subjected to the same phyto-depurative processes which take place in the first array of basins VFO 63.

Upon outletting from the second array of VFO 64, the second passage of phyto-depuration is ended up and the so fully depurated liquid fraction of the sewage can be used for irrigating cultures.

The present invention also relates to an apparatus 100 for the phyto-depuration of zootechnical sewage, in particular from pigs, suitable to perform the above-described method. The apparatus 100 is downstream of the collection tanks 90 of the sewage and it comprises a first portion 1 and a second portion 2.

The collection tanks 90 are connected, for example through pipes and pumping stations, to the so-called first portion 1 of the apparatus 100. Said collection tanks 90, for example, have an overall capacity of 600m$^3$.

By referring to Figure 2, the first portion 1 of the apparatus 100 includes liquid-solid separation means 10; said separation means 10 is a helical separator (sieve 0.5mm, hydraulic flow 12-15m$^3$/h, engine power 5.5, kW, absorbed power 3kW, inner structure made of stainless steel AISI 304, sizes 2100x800x700cm, weight 410kg). Moreover, inside the first portion 1 of the apparatus 100, a plurality of storage tanks 11 is comprised, positioned downstream of the liquid-solid separation means 10. Such plurality of storage tanks 11 comprises at least a first 12 and a second 13 storage tank connected in series with each other. The first storage tank 12, for the sedimentation of the liquid fraction of the sewage, is connected to the liquid-solid separation means 10. Therefore, the second storage tank 13 is connected in series to such first tank 12.

Said plurality of storage tanks, for example, can be circular and made of reinforced concrete. Preferably the first storage tank 12 can have a capacity of 750m$^3$ whereas the second storage tank 13 can have a capacity of 2000m$^3$.

The second storage tank 13 comprises a pumping station 14 apt to send the liquid fraction of the sewage to the second portion 2 of the apparatus 100. Preferably the pumping station 14 is constituted by a submerged pump, even more preferably with power of 1.5KW, and capacity of 50l/min. Such pumping station 14 is capable of sending to said second portion 2 of the apparatus 100 an amount of sewage liquid fraction preferably equal to 35-40m$^3$ per day.

What is described from this point on can be considered as part of the second portion 2 of the plant 100.

As shown in Figure 2, a first tank 21 is placed upstream of the basins VFV 30, apt to receive the liquid fraction of the sewage coming from the first portion 1 of the apparatus 100. Downstream of the first charging tank 21, a plurality of vertical flow phyto-depuration basins VFV 30, arranged in arrays in series with each other, is positioned. Preferably the arrays are two 33 and 34 each one thereof comprises 4 basins VFV.

Each one of the basins VFV 30 preferably has a surface of 249m$^2$ and, preferably, is waterproofed with the purpose of preventing discharges and leakages. In particular, waterproofing can be obtained by means of the deposition of layers of waterproof materials on the bottom and on the side walls of each basin of the first array of basins VFV 33. For example, a first waterproof layer and a third waterproof layer can be constituted by a non-woven fabric, preferably having grammage of 300g/m$^2$, whereas the second layer is a geomembrane constituted by a polyethylene film, still more preferably high-density polyethylene HDPE having thickness of 1.4 mm. The first layer is placed on the bottom and on the sides of the basins VFV 22 directly in contact with the medium, similarly the third layer is placed on the bottom and on the sides of the basins VFV 22 of the first array directly in contact with the material which constitutes the basin content whereas the second layer is interposed between the first layer and the third layer.

Around each basin VFV 30 there is a gutter which has the function of housing the flaps of the waterproof layers and at the same time of housing rain water. Preferably such gutter has depth and width of about 30 cm.

Each basin VFV 30 is implemented so that there is a difference in level between the inlet side of the basin 35, that is the basin side therethrough the sewage liquid fraction enters, and the outlet side of the basin 36, that is the basin side therethrough the sewage liquid fraction is made to outflow. In particular, such difference in level is about 2%. In the specific case, the difference in level is created by making that near the inlet side of the basin 35 the basin depth is lower than that near the outlet side of the basin 36. Preferably the basin depth at the inlet side 35 is comprised between 50 and 100 cm, still more preferably between 70 and 90 cm, and still more preferably around 85 cm. The basin depth at the outlet side 36 is comprised between 100 cm and 150 cm, still more preferably between 120 and 140 cm, and still more preferably around 135 cm.

As described previously, the basins VFV of the first array and of the second array 33 and 34 include the above-mentioned mixture of effective micro-organisms. Moreover, the basins VFV 30 contain a filling medium 50 constituted by layers of gravel 51 and sand 52 having different granulometries whereon aquatic macrophyte plants, preferably of the species *Phragmites Australis* ("common reed"), are rooted. The filling medium 50 is formed by: round river gravel 51a having granulometry comprised between 16 and 32 mm and forming a first filling layer on the basin bottom, fluvial sand 52 having granulometry comprised between 0 and 3 mm forming an intermediate filling layer, round river gravel 51b having granulometry comprised between 8 and 16mm and forming a filling surface layer of the basin. It is particularly preferable that the gravel has round shape and it is not broken gravel. It is also preferable that the gravel 51 and the sand 52 are well washed and without clays or other substances.

Preferably the height of the layers of gravel 51 near the inlet side 35 is: 60 cm for the gravel 51a, 10 cm for the gravel 51b and 65 for the sand 52. Preferably the height of the layers of gravel 51 near the inlet side 35 is: 60 cm for the gravel 51a, 10 cm for the gravel 51b and 65 for the sand 52.

Moreover, inside the gutter there is the gravel, whose granulometry is preferably about 3 cm.

To the first charging tank 21 a pumping station 22 is connected, which is responsible for sending the liquid fraction of the sewage to the first array of basins VFV 33. Such pumping station 22 preferably comprises two analogous submerged pumps with separate delivery for the alternate feeding of the pair of side basins 33a and of the pair of central basins 33b. The alternate feeding of the pair of side basins allows to save energy, by avoiding consumption peaks. The pipes used to connect the pumping station 22 with the respective basins VFV of the first array 33 are preferably made of polymeric material, still more preferably high-density polyethylene HDPE, and they have a diameter in the order of 110mm and nominal pressure (NP) equal to about 1, and relationship between outer diameter and thickness of the wall of the pipe itself (SDR) equal to about 17. Moreover, preferably, on the connecting pipes there are manual valves, for example of the throttle type, for managing the feeding of the basins VFV of the first array 33 manually in case of failure to one or both pumps of the pumping station 22.

The sewage liquid fraction is distributed on the surface of each basin VFV of the first array 33 through a distribution device 40 comprising a plurality of pipes 42. As shown in Figure 3, said pipes 42 transport and distribute uniformly the liquid fraction of the sewage near the centre of the basin through a plurality of feeding elements 43. Preferably the pipes 42 are made of polymeric material, still more preferably high-density polyethylene HDPE, and they have a diameter in the order of 75mm and NP 10 and SDR equal to about 17. The feeding elements 43 are equipped with systems for adjusting flow rates, such as for example, manually controlled ball valves made of PVC.

By referring to Figure 3, in a preferred configuration, the pipes 42 define a kind of ring-like structure at the portion of basin nearer to the basin inlet side 35. On the central branch 44 or the ring the plurality of feeding elements 43 is installed; for example, the plurality of feeding elements 43 can be formed by 18 junctions for each side of the central branch 44 of the ring resulting in a total of 36 feeding elements 43 existing inside each basin of the first array of VFV 33. Preferably the feeding elements 43 are implemented by means of holed pipes made of polymeric material, still more preferably made of low-density polyethylene, having a diameter of about 32 mm and NP about 6. Preferably the feeding elements 43 are equidistant therebetween, still more preferably they are spaced apart therebetween by 0.50m. Preferably, moreover, the holes on each junction are 34, they have circular shape with diameter of about 4 mm and they are aligned therebetween with a distance of about 0.40m from one another.

The diameter of the feeding elements 43 is so as to allow a good distribution of the sewage along the whole line. For example, by providing a pressure equal to 0.27mca at the beginning of the distribution element 43, the pressure drop along the length of the element 43 is equal to about 0.14mca with a pressure at the end of the pipe of just 0.13mca. Then, for example, considering the number of holes existing in the basin equal to 1224 and an average load on the hole equal to 0.20 mca, the total capacity results to be about 36.6 mc/h.

On the bottom of the basins VFV of the first array 33 there is a device for collecting the liquid fraction of the sewage 41 comprising a plurality of collection pipes 45 equipped with openings. Preferably such collection pipes 45 are at least 4 and they are grid-like arranged. Moreover, preferably the collection pipes 45 are made of plastic material, still preferably in PVC, they have a diameter of about 110mm, nominal stiffness around 4 kN/m$^2$ and SDR of about 41. Moreover, said collection pipes 45 are preferably equipped with coating, for example made of non-woven fabric, so as to avoid that possible solid particles could enter inside thereof. The collection device 41 further comprises a "T"-like pipe 46 wherein the collection pipes 45 end up. The "T"-like pipe 46 has no openings and it is placed near the outlet side 36 of each basin VFV. The "T"-like pipe 46 through connecting means, such as for example a radial flange, connects to the acquisition pipe 47. The acquisition pipe 47 and the acquisition pipe 47b, respectively, end up into the charging tanks downstream of the first and of the second array of basins VFV 33 and 34. Downstream of the second array of basins VFV 33 there is the second charging tank 23, whereas downstream of the second array of basins VFV 34 there is the third charging tank 25.

As stated previously, the second array of basins VFV 34 has capacity and functionality and features wholly identical to those of the first array of basins VFV 33. Moreover, the distribution device 40 and the collection device 41 are identical for the first and the second array of basins VFV 33 and 34. Similarly, the second charging tank 23 has capacity and functionality and features wholly identical to the first charging tank 21.

Therefore, on the third charging tank 25, which collects the liquid fraction of the sewage outletting from said basins 34, a pumping station 26 is installed. Said pumping station 26 comprises a pump responsible for feeding the horizontal-flow basins VFO. Preferably, such pump is of the submerged type and it is controlled by level sensors. Moreover, the pumping station 29 can include an additional pump which, if required, can re-launch the sewage liquid fraction to the first charging tank 21 in order to start a new step of phyto-depuration starting from the first array of basins VFV 33.

Downstream of the plurality of vertical flow basins 30, and more precisely downstream of the third charging tank 25, there is a plurality of horizontal flow phyto-depuration basins VFO 60 arranged in arrays in series with each other. Preferably the arrays are two 63 and 64 each one thereof comprises 2 basins VFO.

Preferably, the basins VFO 60 have a surface of 285m$^2$ and they have walls and bottom covered by waterproofing layers. In particular the waterproofing layers can be the same existing in the VFV basins: a geomembrane interposed between two layers of TNT.

As for the basins VFV, even around each basin VFO 60 there is a gutter to include the flaps of the waterproof layers and to dispose rain water. Preferably such gutter has depth and width of about 30 cm.

Each VFO 60 is implemented so that there is a difference in level between the basin inlet side 65, that is the basin side therethrough the sewage liquid fraction enters, and the basin outlet side 66, that is the basin side therethrough the sewage liquid fraction is made to be discharged. Preferably, such difference in level is about 1%. In the specific case, the difference in level is created by making that near the basin inlet side 65 the basin depth is lower than that near the basin outlet side 66. Preferably, the basin depth at the inlet side 65 is comprised between 50 and 100 cm, still more preferably between 70 and 90 cm, and still more preferably around 75 cm. The basin depth at the outlet side 36 is comprised between 80 cm and 120 cm, still more preferably between 100 and 120 cm, and still more preferably around 103 cm.

As described previously, the basins VFO 60 include the above-described mixture of effective micro-organisms. Moreover, inside the basins VFO 60 there is a filling medium 53 constituted by layers of gravels 54 having different granulometries whereon aquatic macrophyte plants, preferably of the species *Phragmites Australis* ("common reed") are rooted. The filling medium 53 is formed by: round river gravel 54a having granulometry of about 3cm and round river gravel 54b having granulometry comprised between 0.8 and 1.6 cm. It is particularly preferred that the gravel has round shape and it is not broken gravel. It is further preferred that the gravels are well washed and without clays or other substances.

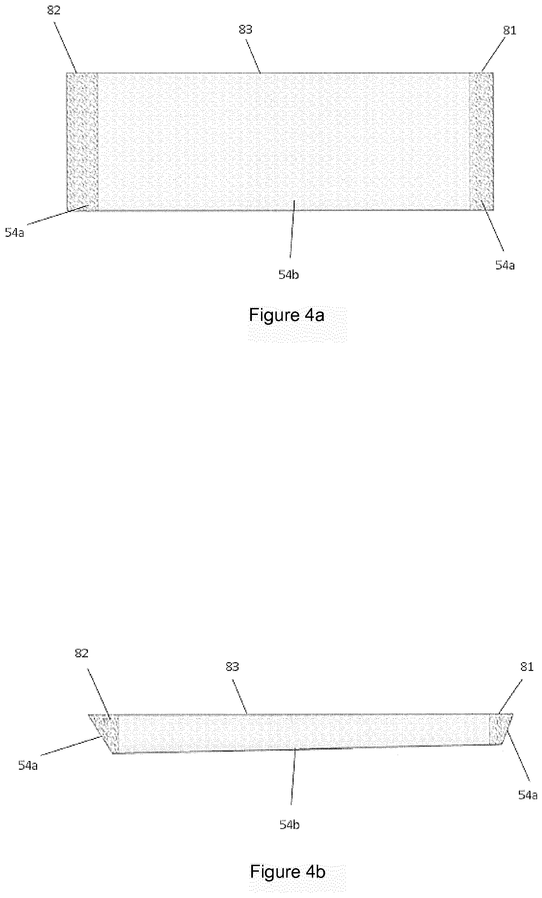

By referring to Figures 4a and 4b, the gravel 54a occupies a first region 81 near the inlet side 65 and a second region 82 near the outlet side 66 whereas the gravel 54b occupies a third region 83 interposed between the other two regions. The depth of the three regions is equal or slightly lower than the depth of the basins VFO 60; preferably the depth of the three regions is lower by about 5 cm than the depth of the basins VFO 60. Moreover, it is preferred that the first region 81 has an extension equal to the length of the basin inlet side.

Moreover, inside the gutter around the basins VFO 60 there is gravel, whose granulometry is preferably about 3 cm.

The whole surface of the basins VFO 60 and the surface of the gutters surrounding them is preferably coated with an additional layer of gravel 54c, still more preferably such layer has a depth of about 5 cm.

The connection between the third charging tank 25 and each inlet well 61 of the first array of basins VFO 63 is implemented preferably through pipes made of polymeric material, still more preferably in polyurethane foam having diameter of about 110mm, NP of about 10 and SDR of about 17.

As it can be seen from Figure 5, the inlet wells 61 communicate with the inlet side 65 of each VFO. Preferably, the liquid fraction of the sewage sent to each well has to be maintained at a height *x* higher than the height of liquid fraction of the sewage included in the basin VFO downstream of the inlet well 61. Still more preferably such height *x* corresponds to 20 cm. The inlet wells 61, for example, are made of cement.

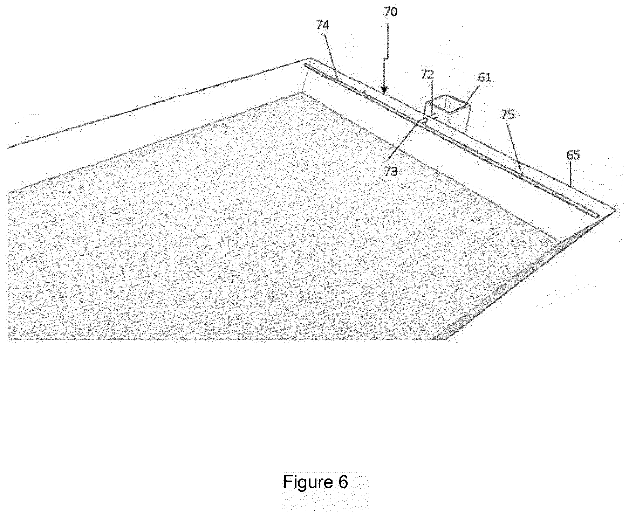

By exploiting the hydraulic load which is created inside the inlet wells 61, the liquid fraction of the sewage flows out by gravity inside of the distribution device 70 of the basins VFO 60, shown in details in Figure 6.

In particular each inlet well 61 is connected with the distribution device 70 of the respective basin VFO through a pipe 72 preferably made of polymeric material, and still more preferably of polyurethane foam with diameter of about 110 cm, NP around 10 and SDR around 17. The pipe 72 crosses the waterproofing layers of the basin and connects through connecting means, such as for example a radial flange, to a "T"-like junction 73 existing inside the same basin near the inlet side 65. Then, from the "T"-like junction 73 existing inside each basin VFO 60 two coaxial feeding pipes 74, 75 branch out substantially extending for the whole length of the inlet side 65. Such feeding pipes 74, 75 have openings, preferably holes having diameter of about 1 cm spaced apart therebetween by 3 cm and arranged on two alternative rows parallel along the whole development of the two pipes.

Moreover, such feeding pipes 74 and 75 are preferably placed below the surface level of the filling medium 53 of the basin. Still more preferably they are at about 5-10 cm below such level.

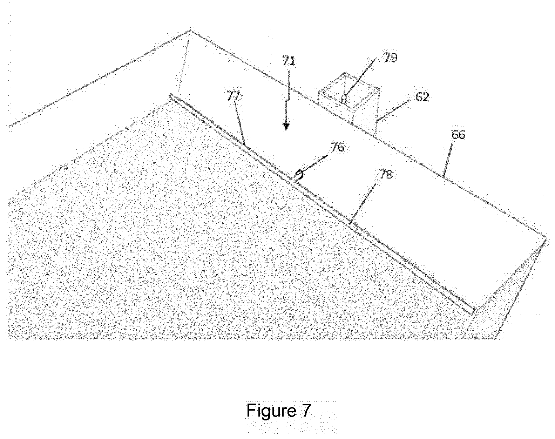

Figure 7 shows the collection device 71 of the sewage outletting from each basin VFO 60. Near the basin outlet side 66, there is a collection device 71, the shape thereof is preferably similar to that of the distribution device 70. Preferably the collection system is formed by two coaxial collection pipes 77, 78 connected therebetween through a "T"-like junction 76. The collection pipes 77, 78 are preferably made of plastic material, still more preferably PVC, with diameter of 110mm, NP around 4 and SDR of about 41. An additional preferred feature consists in that such collection pipes 77 and 78 are equipped with coating, for example non-woven fabric, to prevent the entrance of possible solid particles inside thereof. Moreover, the collection pipes 77 and 78 are preferably placed on the bottom of the basin and they have a length substantially equal to the outlet side of the basing along thereof they are positioned. The "T"-like junction 76 crosses the waterproofing layers of the basin to connect through connecting means, for example a radial flange, with the discharge pipe 79 which, in turn, enters the discharge well 62.

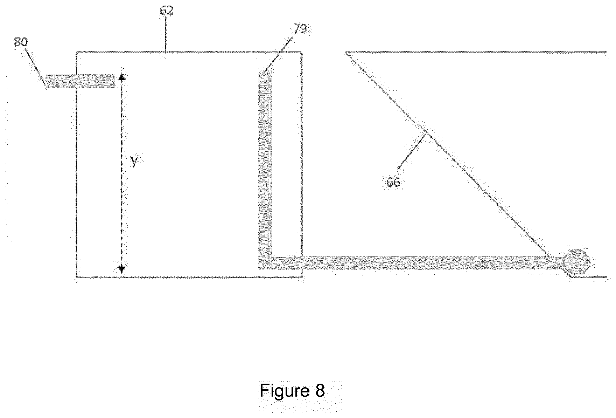

As it can be seen in Figure 7 and still better in Figure 8, the discharge pipe 79 preferably has a shape like a "L": one side of the "L" enters near the bottom of the discharge well 62, that is the side of the well resting upon the ground, whereas the other side rises perpendicularly to the bottom of the discharge well 62. The sewage liquid fraction the outflows from the discharge well 62 thanks to a draining pipe 80 installed parallelly to the bottom of the discharge well 62. Preferably the draining pipe 80 is placed at a height *y* equal or lower than the height of the liquid fraction of the sewage included in the basin VFO upstream of the discharge well 62. The discharge wells 62 for example are made of cement.

By exploiting the hydraulic load which is created between the inlet well 61 and the discharge well 62 and thanks to the basing tilting, the liquid fraction of the sewage inletting the basin is drained outside each VFO 60 without the need of recurring to the use of energy. Moreover, the passage from one array of basins VFO to the subsequent one takes place by exploiting the principle of the communicating vessels and therefore it does not require the use of energy sources.

For the effective operation of the VFO 60 it is fundamental that the flow rate of sewage inletting the first array of basins VFO 63 is equal to the equilibrium flow. From the performed analytic evaluations and after the field inspection step such flow rate results to be equal to 7 mc/h.

For larger flow rates a partial flooding of the first array VFO would happen caused by the flow rate excess which the basin itself does not succeed in disposing considering the just defined operation.

For larger flow rates, in fact, it happens that the hydraulic charge required to the outflow, by keeping constant porosity of the filling medium and diameters of the pipes, has to increase by determining the partial flooding mentioned above.

The arrays of basins VFO 63, 64 have capacity and functionality and features wholly identical therebetween. In the same way, the filling medium 53 is identical in all VFO 63, 64. Moreover, the inlet wells 61 and the outlet wells 62 are identical for both arrays of basins VFO 63 e 64. Analogously the distribution devices 70 and the collection devices 71 installed on the basins VFO of the first and of the second array 63 and 64 are identical therebetween.

At last, downstream of the second array of basins VFO 64 there is a primary collection basin 91 which collects the depurated sewage liquid fraction. In particular the latter flows by gravity from the second array of basins VFO 64 to a primary collection basin 91. The capacity of said basin for example is 10m$^3$. The primary collection basin 91 can be equipped with a pumping station 92, constituted for example by a float submerged pump, which sends the depurated sewage liquid fraction to a final collection basin 93, for example having capacity of 750 m3.

The experimental data related to the composition of a sample of sewage to be treated and after treatment according to the process of the present invention are shown hereinafter.

Sample of sewage entering the apparatus:

|  |  |  |
|---|---|---|
|  | pH | 8.4 |
| μS/cm | Electrical conductivity (20°C) | 3090 |
| % | % dry substance | 4.03 |
| mg/kg | BOD5 | 14906 |
| mg/kg | COD | 32300 |
| mg/kg | Ammoniacal nitrogen | 3670 |
| mg/kg | Nitric nitrogen | <10 |
| mg/kg | Nitrous nitrogen | <10 |
| mg/kg | Total nitrogen | 3692 |
| mg/kg | Organic nitrogen | 838 |
| mg/kg | Phosphates | 1018 |

The parameter BOD5 ("Biochemical Oxygen Demand") designates biochemical request for oxygen that is the amount of oxygen required to degrade the organic substance in a period of time of 5 days. By way of example it is to be noted that in a domestic sewage the same parameter on the average has a value of 300 mg/l, considerably lower than the value of 14,906 mg/kg of the case at issue.

Sample of sewage outletting from the first portion 1 of the apparatus 100:

|  | pH | 7.8 |
|---|---|---|
| μS/cm | Electrical conductivity (20°C) | 1630 |
| % | % dry substance | 0.89 |
| mg/kg | BOD5 | 3133 |

| mg/kg | COD | 9020 |
|---|---|---|
| mg/kg | Ammoniacal nitrogen | 1325 |
| mg/kg | Nitric nitrogen | 0 |
| mg/kg | Nitrous nitrogen | 0 |
| mg/kg | Total nitrogen | 1857 |
| mg/kg | Organic nitrogen | 556 |
| mg/kg | Phosphates | 133 |

As it can be seen from the data, at the outlet of this apparatus portion the organic charge, in terms of BOD5, was reduced by 79%. Upon reaching such result, the effective micro-organisms have a fundamental role, but they further contribute in separating the dry substance and the subsequent sedimentations. Sample of sewage outletting from the first portion 1 of the apparatus 100 without recirculation:

|  | pH | 7.1 |
|---|---|---|
| μS/cm | Electrical conductivity (20°C) | 3840 |
| % | % dry substance | 0.25 |
| mg/kg | BOD5 | 175 |
| mg/kg | COD | 338 |
| mg/kg | Ammoniacal nitrogen | 158 |
| mg/kg | Nitric nitrogen | 74 |
| mg/kg | Nitrous nitrogen | 31 |
| mg/kg | Total nitrogen | 186 |
| mg/kg | Organic nitrogen | 63 |
| mg/kg | Phosphates | <30 |

In percentage terms, it was then possible to obtain at the end of the phyto-depuration treatment the following percentage reductions with respect to the composition of the inletting sewage:

| BOD5 | 98% |
|---|---|
| COD | 98% |
| Ammoniacal nitrogen | 96% |

The calculation methods for determining the depurative potentialities of the various stages of apparatus, without considering the action of the effective micro-organisms, possible with one single treatment, are shown hereinafter.

Horizontal submerged flow (SFS-H)

In order to calculate the depurative capability of the horizontal flow submerged basins, let's apply the monoparametric model "Reed, Crites&Middlebrooks 1995". the general form of the method is given by the following equation:

$$\ln(Ci/Ce) = KT*t$$

wherein:

t= A*y*n/Q hydraulic retention time in days
A basin surface
y average depth of the humid area
n porosity % (expressed as fraction)
Q daily average hydraulic load (m³/day)
KT= KR*fR^(Tw-TR) kinetic constant at temperatures Tw in days ^-1
KR kinetic constant at the reference temperature, in days ^-1
fR temperature coefficient for the constant kinetic
Tw sewage temperature in the humid area in °C
TR=20°C reference temperature in °C

Data:

A= 1143 mq
Y= 0.65 m
n= 0.30
Q= 35 mc/g

There is an estimated retention time of:
t= (1143*0.65*0.30)/35= 6.37 days
Moreover, with an average sewage temperature in the basins during the treatment Tw=12°C, with reference to the technical literature, for the treatment of BOD5 and NH4-N, respectively, the following kinetic constants KT are estimated:

$$KT\ (BOD5) = 1.104*1.06^{\wedge}(12-20)= 0.693$$

$$KT\ (NH4\text{-}N) = 0.41*1.048^{\wedge}(12-20)= 0.282$$

Therefore, at the outlet of the horizontal flow basins for the concentrations of the pollutants in the effluent, for the BOD5 and NH4-N:

$$Ce\ (BOD5)= Ci/(e^{\wedge}KT*t) = 1766/(e^{\wedge}(0.693*6.37))= \textbf{21.37 mg/kg}$$

$$Ce\ (NH4\text{-}N)=Ci/(e^{\wedge}KT*t) = 1007/(e^{\wedge}(0.282*6.37))= \textbf{167.07 mg/kg}$$

are estimated, respectively.
These data will be important to understand the way to optimize the dosages of the effective micro-organisms in the various depurative passages even in relation to the climatic variations. In fact, at low temperatures the micro-organisms have a lower yield and then the dose is to be increased.
The present invention has been sofar described with reference to preferred embodiments. It is to be meant that other embodiments belonging to the same inventive core may exist, and they are defined by the protective scope of the claims.

**Claims**

1. A method for the phyto-depuration of zootechnical sewage, in particular from pigs, comprising the following steps:

   a) Collection of sewage;
   b) Separation of the liquid fraction of the sewage from the solid part by means for the mechanical separation, wherein said means is a helical separator;
   c) Sedimentation of said liquid fraction of the sewage;
   d) Oxidation of the liquid fraction of the sewage in the presence of effective micro-organisms;
   e) Collection of the liquid fraction of the sewage in a first charging tank (21); and from this point,
   f) At first, at least two subsequent passages of the liquid fraction of the sewage through vertical submerged flow phyto-depuration basins (30), each basin (30) having an inlet side (35) and an outlet side (36), from which respectively the liquid fraction of the sewage subjected to phyto-depuration enters and exits; and subsequently
   g) At least two subsequent passages of the liquid fraction of the sewage through horizontal submerged flow phyto-depuration basins (60), each horizontal submerged flow phyto-depuration basin (60) having an inlet side (65) and an outlet side (66), from which the liquid fraction of the sewage subjected to phyto-depuration respectively enters and exits;
   wherein said effective micro-organisms comprise Lactobacilli, Yeasts, Photosynthetic bacteria, Actinomycetes, fermentative fungi;
   wherein said vertical submerged flow phyto-depuration basins (30) and said horizontal submerged flow phyto-depuration basins (60) contain a filling medium (50, 53), comprising gravels (51, 54) and/or sand (52) having different granulometries, and macrophyte aquatic plants;
   wherein said filling medium (50) of the vertical submerged flow phyto-depuration basins (30) is constituted by: round river gravel (51a) having granulometry comprised between 16 and 32 mm and forming a first filling layer on the bottom of the basins (30), fluvial sand (52) having granulometry comprised between 0 and 3 mm forming an intermediate filling layer, round river gravel (51b) having granulometry comprised between 8 and 16 mm and forming a basin filling surface layer;
   wherein said filling medium (53) of the horizontal submerged flow phyto-depuration basins (30) is formed by: round river gravel (54a) having granulometry of about 3 cm and round river gravel (54b) having granulometry comprised between 0.8 and 1.6 cm, and wherein the gravel (54a) having granulometry of about 3cm occupies a first region (81) near the inlet side (65) and a second region (82) near the outlet side (66) of the horizontal submerged flow phyto-depuration basins (30) whereas the gravel (54b) having granulometry comprised between 0.8 and 1.6 cm occupies a third region (83) interposed between the other two regions.

2. The method according to claim 1, comprising a preliminary step consisting in the introduction of a mixture of effective micro-organisms in animal feeding systems and/or animal feed and/or in drinking and/or drinking systems.

3. The method according to claim 1 or 2 comprising a preliminary step consisting in the introduction of a mixture of effective micro-organisms on the surface of the barn and/or the litter.

4. The method according to any of the preceding claims, wherein during the steps c) and/or d) and/or f) and/or g) the liquid fraction of the sewage is added with a mixture of effective micro-organisms.

5. The method according to any of the preceding claims, wherein vertical submerged flow phyto-depuration basins (30) and/or horizontal submerged flow phyto-depuration basins (60) contain a mixture of effective micro-organisms.

6. The method according to any of the preceding claims, wherein step f) is carried out more than once.

7. The method according to any of the preceding claims, wherein steps c) and d) have a duration of two to three months.

8. The method according to any of the preceding claims, wherein during step f), the liquid fraction of the sewage is uniformly and intermittently distributed above the vertical submerged flow phyto-depuration basins (30).

9. An apparatus (100) for the phyto-depuration of zootechnical sewage, in particular from pigs, comprising a first portion (1) which, in turn, comprises:

   - liquid-solid separation means for the mechanical separation to separate the liquid fraction from the solid one existing in the sewage, wherein the liquid solid separation means is a helical separator (10),

- a plurality of storage tanks (11), wherein said storage tanks are apt to collect the liquid fraction of the sewage for the sedimentation and the oxidation; wherein said plurality of storage tanks (11) comprises a first storage tank (12) and a second storage tank (13) connected in series with each other; wherein said second storage tank (13) is apt to make the liquid fraction of the sewage to sediment and to oxidize in presence of effective micro-organisms;

and a second portion (2) which, in turn, comprises:

- a plurality of vertical submerged flow phyto-depuration basins (30), each basin (30) having an inlet side (35) and an outlet side (36), from which respectively the liquid fraction of the sewage subjected to phyto-depuration enters and exits,
- a plurality of horizontal submerged flow phyto-depuration basins (60), each basin (60) having an inlet side (65) and an outlet side (66), from which the liquid fraction of the sewage subjected to phyto-depuration respectively enters and exits;
- a first charging tank (21) apt to receive the liquid fraction of the sewage coming from said first portion (1) and placed upstream of the vertical submerged flow phyto-depuration basins (30);

wherein the horizontal submerged flow phyto-depuration basins (60) are located downstream of the vertical submerged flow phyto-depuration basins (30) and wherein the vertical submerged flow phyto-depuration basins (30) and the horizontal submerged flow phyto-depuration basins (60) are arranged in a plurality of arrays (33, 34, 63, 64) in series with each other;

wherein said effective micro-organisms comprise Lactobacilli, Yeasts, Photosynthetic bacteria, Actinomycetes, fermentative fungi;

wherein said vertical submerged flow phyto-depuration basins (30) and said horizontal submerged flow phyto-depuration basins (60) contain a filling medium (50, 53), comprising gravels (51, 54) and/or sand (52) having different granulometries, and macrophyte aquatic plants;

wherein said filling medium (50) of the vertical submerged flow phyto-depuration basins (30) is constituted by: round river gravel (51a) having granulometry comprised between 16 and 32 mm and forming a first filling layer on the bottom of the basins (30), fluvial sand (52) having granulometry comprised between 0 and 3 mm forming an intermediate filling layer, round river gravel (51b) having granulometry comprised between 8 and 16 mm and forming a basin filling surface layer;

wherein said filling medium (53) of the horizontal submerged flow phyto-depuration basins (30) is formed by: round river gravel (54a) having granulometry of about 3cm and round river gravel (54b) having granulometry comprised between 0.8 and 1.6 cm, and wherein the gravel (54a) having granulometry of about 3cm occupies a first region (81) near the inlet side (65) and a second region (82) near the outlet side (66) of the horizontal submerged flow phyto-depuration basins (30) whereas the gravel (54b) having granulometry comprised between 0.8 and 1.6 cm occupies a third region (83) interposed between the other two regions.

10. The apparatus (100) according to claim 9 wherein the vertical submerged flow phyto-depuration basins (30) and/or the horizontal submerged flow phyto-depuration basins (60) contain a mixture of effective micro-organisms.

11. The apparatus (100) according to one of claims 9 or 10 wherein there is a difference in height between the inlet side (35, 65) and the outlet side (36, 66) of each basin of the plurality of vertical submerged flow basins (30) and/or of the plurality of horizontal submerged flow basins (60).

**Patentansprüche**

1. Verfahren zur Phyto-Reinigung von zootechnischem Abwasser, insbesondere von Schweinen, die folgenden Schritte umfassend:

a) Sammlung von Abwasser;
b) Trennung der Flüssigfraktion des Abwassers vom Feststoffanteil durch ein Mittel zur mechanischen Trennung, wobei es sich bei besagtem Mittel um einen Spiralabscheider handelt;
c) Sedimentierung der Flüssigfraktion des Abwassers;
d) Oxidation der Flüssigfraktion des Abwassers in Gegenwart von effektiven Mikroorganismen;
e) Sammlung der Flüssigfraktion des Abwassers in einem ersten Beschickungstank (21); und ab diesem Punkt
f) zunächst mindestens zwei aufeinanderfolgende Durchläufe der Flüssigfraktion des Abwassers durch vertikale Tauchstrom-Phyto-Reinigungsbecken (30), wobei jedes Becken (30) eine Einlassseite (35) und eine Auslassseite (36) hat, an denen die Flüssigfraktion des Abwassers, die der Phyto-Reinigung unterzogen wird, eintritt bzw. austritt;

und danach

g) mindestens zwei aufeinanderfolgende Durchläufe der Flüssigfraktion des Abwassers durch horizontale Tauchstrom-Phyto-Reinigungsbecken (60), wobei jedes horizontale Tauchstrom-Phyto-Reinigungsbecken (60) eine Einlassseite (65) und eine Auslassseite (66) hat, an denen die Flüssigfraktion des Abwassers, die der Phyto-Reinigung unterzogen wird, eintritt bzw. austritt;

wobei die effektiven Mikroorganismen Laktobazillen, Hefen, fotosynthetische Bakterien, Actinomyceten und fermentative Pilze umfassen;

wobei die vertikalen Tauchstrom-Phyto-Reinigungsbecken (30) und die horizontalen Tauchstrom-Phyto-Reinigungsbecken (60) ein Füllmedium (50, 53) enthalten, das Kiese (51, 54) und/oder Sande (52) unterschiedlicher Körnung sowie makrophytische Wasserpflanzen umfasst;

wobei das Füllmedium (50) der vertikalen Tauchstrom-Phyto-Reinigungsbecken (30) gebildet ist durch: runden Flusskies (51a), der eine Korngröße zwischen 16 und 32 mm hat und eine erste Füllschicht auf dem Boden der Becken (30) bildet, Flusssand (52), der eine Korngröße zwischen 0 und 3 mm hat und eine Zwischenfüllschicht bildet, runden Flusskies (51b), der eine Korngröße zwischen 8 und 16 mm hat und eine Beckenfüll-Oberflächenschicht bildet;

wobei das Füllmedium (53) der horizontalen Tauchstrom-Phyto-Reinigungsbecken (30) gebildet ist durch: runden Flusskies (54a) mit einer Korngröße von etwa 3 cm und runden Flusskies (54b) mit einer Korngröße zwischen 0,8 und 1,6 cm, und wobei der Kies (54a) mit einer Korngröße von etwa 3 cm einen ersten Bereich (81) nahe der Einlassseite (65) und einen zweiten Bereich (82) nahe der Auslassseite (66) der horizontalen Tauchstrom-Phyto-Reinigungsbecken (30) einnimmt, während der Kies (54b) mit einer Korngröße zwischen 0,8 und 1,6 cm einen dritten Bereich (83) einnimmt, der zwischen den anderen beiden Bereichen liegt.

2. Verfahren nach Anspruch 1, das einen vorbereitenden Schritt umfasst, der darin besteht, ein Gemisch aus effektiven Mikroorganismen in Tierfütterungssysteme und/oder Tierfutter und/oder Getränke und/oder Tränkesysteme einzubringen.

3. Verfahren nach Anspruch 1 oder 2, das einen vorbereitenden Schritt umfasst, der darin besteht, ein Gemisch aus effektiven Mikroorganismen auf die Oberfläche des Stalls aufzubringen und/oder in die Einstreu einzubringen.

4. Verfahren nach einem der vorhergehenden Ansprüche, wobei während der Schritte c) und/oder d) und/oder f) und/oder g) die Flüssigfraktion des Abwassers mit einem Gemisch aus effektiven Mikroorganismen versetzt wird.

5. Verfahren nach einem der vorhergehenden Ansprüche, wobei die vertikalen Tauchstrom-Phyto-Reinigungsbecken (30) und/oder die horizontalen Tauchstrom-Phyto-Reinigungsbecken (60) ein Gemisch aus effektiven Mikroorganismen enthalten.

6. Verfahren nach einem der vorhergehenden Ansprüche, wobei Schritt f) mehr als ein Mal ausgeführt wird.

7. Verfahren nach einem der vorhergehenden Ansprüche, wobei die Schritte c) und d) eine Dauer von zwei bis drei Monaten haben.

8. Verfahren nach einem der vorhergehenden Ansprüche, wobei bei Schritt f) die Flüssigfraktion des Abwassers gleichmäßig und intermittierend über die vertikalen Tauchstrom-Phyto-Reinigungsbecken (30) verteilt wird.

9. Vorrichtung (100) zur Phyto-Reinigung von zootechnischem Abwasser, insbesondere von Schweinen, mit einem ersten Teilbereich (1), der seinerseits Folgendes aufweist:

- Mittel zur Trennung von Flüssig- und Feststoffen zur mechanischen Trennung, um die Flüssigfraktion von dem im Abwasser vorhandenen Feststoff zu trennen, wobei es sich bei dem Mittel zur Trennung von Flüssig- und Feststoffen um einen Spiralabscheider (10) handelt,

- eine Mehrzahl von Speichertanks (11), wobei die Speichertanks dazu geeignet sind, die Flüssigfraktion des Abwassers zur Sedimentierung und Oxidation zu sammeln; wobei die Mehrzahl von Speichertanks (11) einen ersten Speichertank (12) und einen zweiten Speichertank (13) umfasst, die in Reihe zueinander angeordnet sind; wobei der zweite Speichertank (13) dazu geeignet ist, die Flüssigfraktion des Abwassers sedimentieren zu lassen und in Gegenwart von effektiven Mikroorganismen zu oxidieren;

und einen zweiten Teilbereich (2), der seinerseits Folgendes aufweist:

- eine Mehrzahl von vertikalen Tauchstrom-Phyto-Reinigungsbecken (30), wobei jedes Becken (30) eine Einlassseite (35) und eine Auslassseite (36) hat, an denen die Flüssigfraktion des Abwassers, die der Phyto-Reinigung unterzogen wird, eintritt bzw. austritt,

- eine Mehrzahl von horizontalen Tauchstrom-Phyto-Reinigungsbecken (60), wobei jedes Becken (60) eine Einlassseite (65) und eine Auslassseite (66) aufweist, an denen die Flüssigfraktion des Abwassers, die der Phyto-Reinigung unterzogen wird, eintritt bzw. austritt;

- einen ersten Beschickungstank (21), der dazu geeignet ist, die aus dem ersten Teilbereich (1) kommende Flüssigfraktion des Abwassers aufzunehmen, und der stromaufwärts der vertikalen Tauchstrom-Phyto-Reinigungsbecken (30) angeordnet ist;

wobei sich die horizontalen Tauchstrom-Phyto-Reinigungsbecken (60) stromabwärts der vertikalen Tauchstrom-Phyto-Reinigungsbecken (30) befinden und die vertikalen Tauchstrom-Phyto-Reinigungsbecken (30) und die horizontalen Tauchstrom-Phyto-Reinigungsbecken (60) in einer Mehrzahl von Anordnungen (33, 34, 63, 64) in Reihe zueinander angeordnet sind;

wobei die effektiven Mikroorganismen Laktobazillen, Hefen, fotosynthetische Bakterien, Actinomyceten und fermentative Pilze umfassen;

wobei die vertikalen Tauchstrom-Phyto-Reinigungsbecken (30) und die horizontalen Tauchstrom-Phyto-Reinigungsbecken (60) ein Füllmedium (50, 53) enthalten, das Kiese (51, 54) und/oder Sande (52) unterschiedlicher Körnung sowie makrophytische Wasserpflanzen umfasst;

wobei das Füllmedium (50) der vertikalen Tauchstrom-Phyto-Reinigungsbecken (30) gebildet ist durch: runden Flusskies (51a), der eine Korngröße zwischen 16 und 32 mm hat und eine erste Füllschicht auf dem Boden der Becken (30) bildet, Flusssand (52), der eine Korngröße zwischen 0 und 3 mm hat und eine Zwischenfüllschicht bildet, runden Flusskies (51b), der eine Korngröße zwischen 8 und 16 mm hat und eine Beckenfüll-Oberflächenschicht bildet;

wobei das Füllmedium (53) der horizontalen Tauchstrom-Phyto-Reinigungsbecken (30) gebildet ist durch: runden Flusskies (54a) mit einer Korngröße von etwa 3 cm und runden Flusskies (54b) mit einer Korngröße zwischen 0,8 und 1,6 cm, und wobei der Kies (54a) mit einer Korngröße von etwa 3 cm einen ersten Bereich (81) nahe der Einlassseite (65) und einen zweiten Bereich (82) nahe der Auslassseite (66) der horizontalen Tauchstrom-Phyto-Reinigungsbecken (30) einnimmt, während der Kies (54b) mit einer Korngröße zwischen 0,8 und 1,6 cm einen dritten Bereich (83) einnimmt, der zwischen den anderen beiden Bereichen liegt.

10. Vorrichtung (100) nach Anspruch 9, wobei die vertikalen Tauchstrom-Phyto-Reinigungsbecken (30) und/oder die horizontalen Tauchstrom-Phyto-Reinigungsbecken (60) ein Gemisch aus effektiven Mikroorganismen enthalten.

11. Vorrichtung (100) nach Anspruch 9 oder 10, wobei es einen Höhenunterschied zwischen der Einlassseite (35, 65) und der Auslassseite (36, 66) jedes der Mehrzahl von vertikalen Tauchstrombecken (30) und/oder der Mehrzahl von horizontalen Tauchstrombecken (60) gibt.

## Revendications

1. Procédé de phytoépuration d'eaux usées zootechniques, en particulier de cochons, comprenant les étapes suivantes :

a) collecte d'eaux usées ;
b) séparation de la fraction liquide des eaux usées d'avec la partie solide au moyen d'une séparation mécanique, dans laquelle lesdits moyens consistent en un séparateur hélicoïdal ;
c) sédimentation de ladite fraction liquide des eaux usées ;
d) oxydation de la fraction liquide des eaux usées en présence de microorganismes efficaces ;
e) collecte de la fraction liquide des eaux usées dans un premier réservoir de chargement (21) ; et à partir de ce point
f) en premier, au moins deux passages subséquents de la fraction liquide des eaux usées dans des bassins de phytoépuration à écoulement noyé vertical (30), chaque bassin (30) ayant un côté d'entrée (35) et un côté de sortie (36), à partir desquels la fraction liquide des eaux usées soumises à une phytoépuration respectivement entre et sort ; et ensuite
g) au moins deux passages subséquents de la fraction liquide des eaux usées dans des bassins de phytoépuration à écoulement noyé horizontal (60), chaque bassin de phytoépuration à écoulement noyé horizontal (60) ayant un côté d'entrée (65) et un côté de sortie (66), à partir desquels la fraction liquide des eaux usées soumises à une phytoépuration respectivement entre et sort ;

dans lequel lesdits microorganismes efficaces comprennent les lactobacilles, les levures, les bactéries photosynthétiques, les actinomycètes, les champignons fermentatifs ;

dans lequel lesdits bassins de phytoépuration à écoulement noyé vertical (30) et lesdits bassins de phytoépuration à écoulement noyé horizontal (60) contiennent un milieu de remplissage (50, 53) comprenant du gravier (51, 54) et/ou du sable (52) ayant différentes granulométries et des plantes aquatiques macrophytes ;

dans lequel ledit milieu de remplissage (50) des bassins de phytoépuration à écoulement noyé vertical (30) consiste en : gravier de rivière rond (51a) ayant une granulométrie comprise entre 16 et 32 mm et formant une première couche de remplissage au fond des bassins (30), sable fluvial (52) ayant une granulométrie comprise entre 0 et 3 mm et formant une couche de remplissage intermédiaire, gravier de rivière rond (51b) ayant une granulométrie comprise entre 8 et 16 mm et formant une couche de surface de remplissage de bassin ;

dans lequel ledit milieu de remplissage (53) des bassins de phytoépuration à écoulement noyé horizontal (30) est formé de : gravier de rivière rond (54a) ayant une granulométrie d'environ 3 cm et gravier de rivière rond (54b) ayant une granulométrie comprise entre 0,8 et 1,6 cm, et dans lequel le gravier (54a) ayant une granulométrie d'environ 3 cm occupe une première région (81) proche du côté d'entrée (65) et une deuxième région (82) proche du côté de sortie (66) des bassins de phytoépuration à écoulement noyé horizontal (30) tandis que le gravier (54b) ayant une granulométrie comprise entre 0,8 et 1,6 cm occupe une troisième région (83) interposée entre les deux autres régions.

2. Procédé selon la revendication 1, comprenant une étape préliminaire consistant en l'introduction d'un mélange de microorganismes efficaces dans des systèmes d'alimentation pour animaux et/ou un aliment pour animaux et/ou dans une boisson et/ou des systèmes de boisson.

3. Procédé selon la revendication 1 ou 2, comprenant une étape préliminaire consistant en l'introduction d'un mélange de microorganismes efficaces sur la surface de l'étable et/ou de la litière.

4. Procédé selon l'une quelconque des revendications précédentes, dans lequel, durant les étapes c) et/ou d) et/ou f) et/ou g), la fraction liquide des eaux usées est additionnée d'un mélange de microorganismes efficaces.

5. Procédé selon l'une quelconque des revendications précédentes, dans lequel les bassins de phytoépuration à écoulement noyé vertical (30) et/ou les bassins de phytoépuration à écoulement noyé horizontal (60) contiennent un mélange de microorganismes efficaces.

6. Procédé selon l'une quelconque des revendications précédentes, dans lequel l'étape f) est effectuée plusieurs fois.

7. Procédé selon l'une quelconque des revendications précédentes, dans lequel les étapes c) et d) durent deux à trois mois.

8. Procédé selon l'une quelconque des revendications précédentes, dans lequel, durant l'étape f), la fraction liquide des eaux usées est uniformément et par intermittence distribuée au-dessus des bassins de phytoépuration à écoulement noyé vertical (30).

9. Appareil (100) pour la phytoépuration d'eaux usées zootechniques, en particulier de cochons, comprenant une première partie (1) qui, de son côté, comprend :

- un moyen de séparation liquide-solide pour la séparation mécanique servant à séparer la fraction liquide de celle solide existant dans les eaux usées, lequel moyen de séparation liquide-solide est un séparateur hélicoïdal (10),

- une pluralité de réservoirs de stockage (11), lesquels réservoirs de stockage sont aptes à collecter la fraction liquide des eaux usées pour la sédimentation et l'oxydation ; laquelle pluralité de réservoirs de stockage (11) comprend un premier réservoir de stockage (12) et un deuxième réservoir de stockage (13) connectés en série l'un à l'autre ; parmi lesquels ledit deuxième réservoir de stockage (13) est apte à amener la fraction liquide des eaux usées à sédimenter et à s'oxyder en présence de microorganismes efficaces ;

et une deuxième partie (2) qui, de son côté, comprend :

- une pluralité de bassins de phytoépuration à écoulement noyé vertical (30), chaque bassin (30) ayant un côté d'entrée (35) et un côté de sortie (36), à partir desquels la fraction liquide des eaux usées soumises à une phytoépuration respectivement entre et sort,

- une pluralité de bassins de phytoépuration à écoulement noyé horizontal (60), chaque bassin (60) ayant un côté d'entrée (65) et un côté de sortie (66), à partir desquels la fraction liquide des eaux usées soumises à une phytoépuration respectivement entre et sort ;

- un premier réservoir de chargement (21) apte à recevoir la fraction liquide des eaux usées provenant de ladite partie (1), et placé en amont des bassins de phytoépuration à écoulement noyé vertical (30) ;

dans lequel les bassins de phytoépuration à écoulement noyé horizontal (60) sont situés en aval des bassins de phytoépuration à écoulement noyé vertical (30), et dans lequel les bassins de phytoépuration à écoulement noyé vertical (30) et les bassins de phytoépuration à écoulement noyé horizontal (60) sont disposés en une pluralité de réseaux (33, 34, 63, 64) en série les uns avec les autres ;

dans lequel lesdits microorganismes efficaces comprennent les lactobacilles, les levures, les bactéries photosynthétiques, les actinomycètes, les champignons fermentatifs ;

dans lequel lesdits bassins de phytoépuration à écoulement noyé vertical (30) et lesdits bassins de phytoépuration à écoulement noyé horizontal (60) contiennent un milieu de remplissage (50, 53) comprenant du gravier (51, 54) et/ou du sable (52) ayant différentes granulométries et des plantes aquatiques macrophytes ;

dans lequel ledit milieu de remplissage (50) des bassins de phytoépuration à écoulement noyé vertical (30) consiste en : gravier de rivière rond (51a) ayant une granulométrie comprise entre 16 et 32 mm et formant une première couche de remplissage au fond des bassins (30), sable fluvial (52) ayant une granulométrie comprise entre 0 et 3 mm et formant une couche de remplissage intermédiaire, gravier de rivière rond (51b) ayant une granulométrie comprise entre 8 et 16 mm et formant une couche de surface de remplissage de bassin ;

dans lequel ledit milieu de remplissage (53) des bassins de phytoépuration à écoulement noyé horizontal (30) est formé de : gravier de rivière rond (54a) ayant une granulométrie d'environ 3 cm et gravier de rivière rond (54b) ayant une granulométrie comprise entre 0,8 et 1,6 cm, et dans lequel le gravier (54a) ayant une granulométrie d'environ 3 cm occupe une première région (81) proche du côté d'entrée (65) et une deuxième région (82) proche du côté de sortie (66) des bassins de phytoépuration à écoulement noyé horizontal (30) tandis que le gravier (54b) ayant une granulométrie comprise entre 0,8 et 1,6 cm occupe une troisième région (83) interposée entre les deux autres régions.

10. Appareil (100) selon la revendication 9, dans lequel les bassins de phytoépuration à écoulement noyé vertical (30) et/ou les bassins de phytoépuration à écoulement noyé horizontal (60) contiennent un mélange de microorganismes efficaces.

11. Appareil (100) selon l'une des revendications 9 et 10, dans lequel il y a une différence de hauteur entre le côté d'entrée (35, 65) et le côté de sortie (36, 66) de chaque bassin parmi la pluralité de bassins de phytoépuration à écoulement noyé vertical (30) et/ou parmi la pluralité de bassins de phytoépuration à écoulement noyé horizontal (60).

Figure 1

Figure 3

Figure 4a

Figure 4b

Figure 5

Figure 6

Figure 7

Figure 8

**EP 3 502 064 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3013347
- US 6126827 A
- ES 2363363